Europäisches Patentamt

European Patent Office

Office européen des brevets

(11) Publication number: **0 212 990 B1**

# EUROPEAN PATENT SPECIFICATION

(45) Date of publication of patent specification: **28.10.92**   (51) Int. Cl.[5]: **H04N 1/40**

(21) Application number: **86306709.6**

(22) Date of filing: **29.08.86**

(54) **Image processing apparatus.**

(30) Priority: **29.08.85 JP 188397/85**
**29.08.85 JP 188398/85**
**30.08.85 JP 189941/85**
**30.08.85 JP 189942/85**
**30.08.85 JP 189943/85**
**17.10.85 JP 229959/85**
**13.12.85 JP 281639/85**

(43) Date of publication of application:
**04.03.87 Bulletin 87/10**

(45) Publication of the grant of the patent:
**28.10.92 Bulletin 92/44**

(84) Designated Contracting States:
**DE FR GB IT NL**

(56) References cited:
**US-A- 3 842 312**
**US-A- 4 040 094**
**US-A- 4 370 667**

**1977 SID INTERNATIONAL SYMPOSIUM DI-GEST OF TECHNICAL PAPERS, Los Angeles, US, 1977, pages 124-125, Lewis Winner, New York, US; K.Y. WONG et al.: "Adaptive switching of dispersed and clustered halftone patterns for bi-level image rendition"**

(73) Proprietor: **CANON KABUSHIKI KAISHA**
**30-2, 3-chome, Shimomaruko, Ohta-ku**
**Tokyo(JP)**

(72) Inventor: **Suzuki, Yoshiyuki**
**780-205 Shimoodanaka Nakahara-ku**
**Kawasaki-shi Kanagawa-ken(JP)**
Inventor: **Kawamura Naoto**
**2-16-102 Azamino 3-chome Midori-ku**
**Yokohama-shi Kanagawa-ken(JP)**
Inventor: **Ishii, Hiroaki**
**10-9 Yakumo 3-chome**
**Meguro-ku Tokyo(JP)**

(74) Representative: **Beresford, Keith Denis Lewis et al**
**BERESFORD & Co. 2-5 Warwick Court High Holborn**
**London WC1R 5DJ(GB)**

EP 0 212 990 B1

## Description

The present invention relates to an image processing apparatus and a method for reproducing an image.

Halftone images have been reproduced according to conventional methods such as a dither method and a density pattern method. In either method, satisfactory gradation cannot be obtained when a small threshold matrix is used, therefore, in order to obtain satisfactory gradation, a large threshold matrix must be used. This results in degradation of resolution and a rough texture, due to the periodic structure of the matrix, thus reducing the overall quality of the output.

In order to solve the above problem, a plurality of dither matrices are used to provide multivalue dot data according to an improved conventional dither method. However, a complicated circuit arrangement is required to synchronize the respective dither matrices, resulting in a bulky and complicated image processing system. Thus, multivalue dither processing has limitations.

United States patent US-A-4,040,094 discloses an alternative solution, in which an input video signal is converted and supplied to a pulse width modulator, operating by comparing the signal amplitude with a saw-tooth pattern signal, the output of which is used as a screened video output signal. This document also discloses the possibility of adjusting the period of the pulses to vary the screen pitch.

European patent publication EP-A-0 216 462 (having an earlier priority date and later publication date than the priority date of the present application) discloses another technique for forming a halftone image in a laser beam printer or the like .

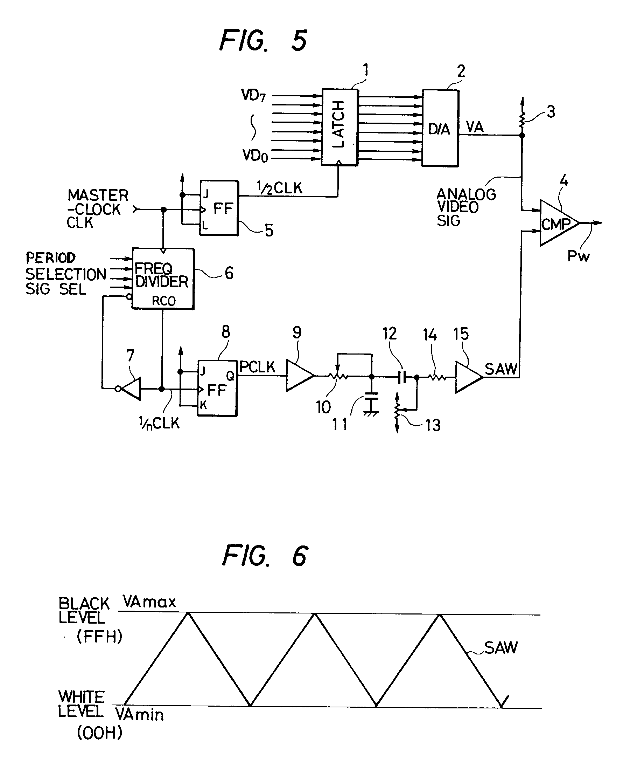

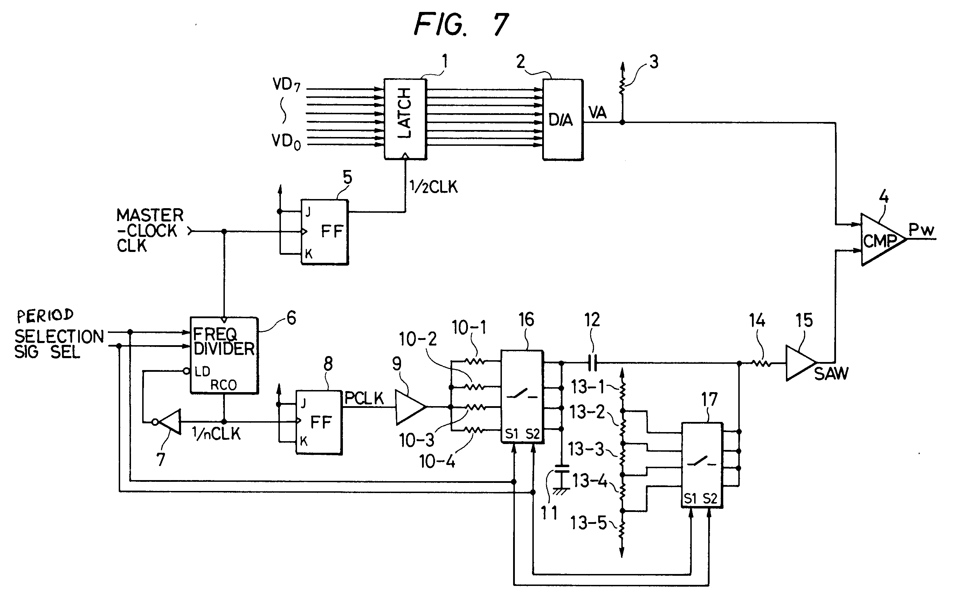

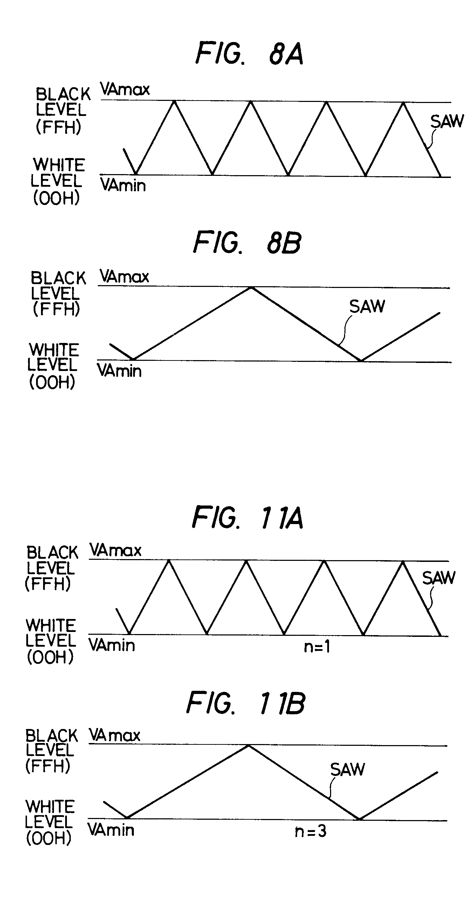

According to this technique, an input digital image signal is converted into an analog image signal, and the analog image signal is compared with a cyclic analog pattern signal such as a triangular wave signal to generate a PWM (Pulse Width Modulation) binary image signal. Fig. 5 shows an apparatus using this technique. Referring to Fig. 5, a digital video signal of eight bits VD0 to VD7 is latched and timed by a latch 1 in response to a clock signal CLK/2. The video clock signal CLK/2 is a clock signal obtained by dividing the frequency of a master clock signal CLK by a JK flip-flop 5 into halves. The latched video signal is converted by a D/A converter 2 into an analog video signal VA. The analog video signal VA is converted by a resistor 3 into a voltage signal. The voltage signal is input to one input terminal of a comparator 4. The master clock signal CLK is n-divided by a frequency divider 6 to produce a clock signal 1/n. The clock signal 1/n is further divided by a JK flip-flop 8 into halves, thus obtaining a pattern clock signal PCLK having a duty ratio of 50%. Therefore, the pattern clock signal PCLK has a period n times that of the video clock signal CLK/2. The pattern clock signal PCLK is input to an integrator constituted by a variable resistor 10 and a capacitor 11 through a buffer 9 and is converted into a triangular wave signal (i.e., an analog pattern signal) SAW having the same period as that of the pattern clock signal PCLK. The bias component of the triangular wave signal SAW is adjusted by a capacitor 12 and a variable resistor 13. The bias-adjusted signal SAW is input to the other input terminal of the comparator 4 through a protective resistor 14 and a buffer amplifier 15. The comparator 4 compares the analog video signal VA with the triangular wave signal SAW. The analog video signal VA is PWM-modulated according to a density represented thereby. In order to obtain a high gray scale value, the level of the analog video signal VA preferably has a relationship with the level of the triangular wave signal SAW, as shown in Fig. 6. Specifically, a maximum level VAmax (e.g., a black level) of the analog video signal VA coincides with a peak level of the triangular wave signal SAW, and at the same time, a minimum level VAmin (e.g., a white level) of the analog video signal VA coincides with a bottom level of the triangular wave signal SAW. With this relationship, the maximum resolution and full-scale linearity are always maintained. In order to satisfy the relationship given in Fig. 6, the amplitude of the triangular wave signal SAW is adjusted by the variable resistor 10, and the bias component thereof is adjusted by the variable resistor 13.

The apparatus described above must reproduce different types of images. For example, in a character image, accurate reproduction of changes from white to black pixels and vice versa is more important than halftone reproduction. However, in a photographic or halftone image, halftone reproduction is more important. Therefore, the period of the pattern clock signal PCLK is selected in the apparatus of Fig. 5 according to the requirement as to which reproduction mode is more important. More specifically, the frequency division ratio of the frequency divider 6 can be changed in the range of, e.g., 1 to 1/n, in response to a period selection signal SEL. In actual character image reproduction, the frequency division ratio is given as, e.g., 1, and a one-pixel component of the input digital video signal is PWM-modulated by one triangular wave signal SAW to properly reproduce a change from a white pixel to a black pixel and vice versa. However, in photographic image reproduction, the frequency division ratio is given as, e.g., n, an n-pixel component of the input digital video signal VA is PWM-modulated by one triangular wave signal SAW, thereby reproducing a natural halftone image. However, in the image processing apparatus described above, the frequency, amplitude, and bias component of the triangular wave signal SAW are changed whenever the frequency division ratio is changed. This does not satisfy the relationship shown in Fig. 6 any longer. In the apparatus of Fig. 5, the resistances of the variable resistors 10 and 13 must be readjusted. In the case of a mixture of characters and photographs in one page, either type of image must be sacrificed.

It is an object of the present invention to eliminate the conventional drawbacks described above.

According to a first aspect of the present invention, there is provided an image processing apparatus, comprising converting means for converting an input image signal, and generating means for generating a pulsed signal and modulating the pulse width of said pulsed signal in response to the converted input signal, characterised by said generating means including means for generating a first pulsed signal with a first period and for generating a second pulsed signal with a second period; said converting means having a first mode of conversion and a second mode of conversion; and selecting means for selecting the first pulsed signal or the second pulsed signal wherein, on selecting the first pulsed signal, said first mode of conversion is selected in sychronism and, on selecting the second pulsed signal, said second mode of conversion is selected in sychronism.

The above and other objects, features and advantages of the present invention will be apparent from the following detailed description and the appended claims in conjonction with the accompanying drawings.

Fig. 1 is a circuit diagram of an image processing apparatus according to a first embodiment of the present invention;

Fig. 2 is a chart showing density conversion tables in a ROM 16;

Figs. 3A and 3B are charts showing the relationships between the triangular wave signal SAW and the density level of the analog image signal VA;

Fig. 4 is a block diagram of an image processing apparatus according to a second embodiment of the present invention;

Fig. 5 is a circuit diagram showing an arrangement of a pulse width modulator;

Fig. 6 is a chart showing an optimal relationship between the triangular wave signal SAW and the density level of the analog image signal VA;

Fig. 7 is a circuit diagram of an image processing apparatus according to a third embodiment of the present invention;

Figs. 8A and 8B are charts showing the relationships between the triangular wave signal and the analog image signal level in the apparatus of Fig. 7;

Fig. 9 is a block diagram of an image processing apparatus according to a fourth embodiment of the present invention;

Fig. 10 is a circuit diagram of an image processing apparatus according to a fifth embodiment of the present invention;

Figs. 11A and 11B are charts showing the relationships between the triangular wave signal SAW and the level of the analog image signal VA in the apparatus of Fig. 10;

Fig. 12 is a circuit diagram showing an arrangement of a pulse width modulator;

Figs. 13A to 13G are timing charts showing waveforms of signals in the circuit of Fig. 12;

Fig. 14 is a circuit diagram of an image processing apparatus according to a sixth embodiment of the present invention;

Figs. 15A to 15D are timing charts showing waveforms of signals in the circuit of Fig. 14; and

Fig. 16 is a schematic perspective view of a scanning optical system of a laser beam printer to which the present invention is applied.

Preferred embodiments of the present invention will be described in detail with reference to the accompanying drawings.

## First Embodiment

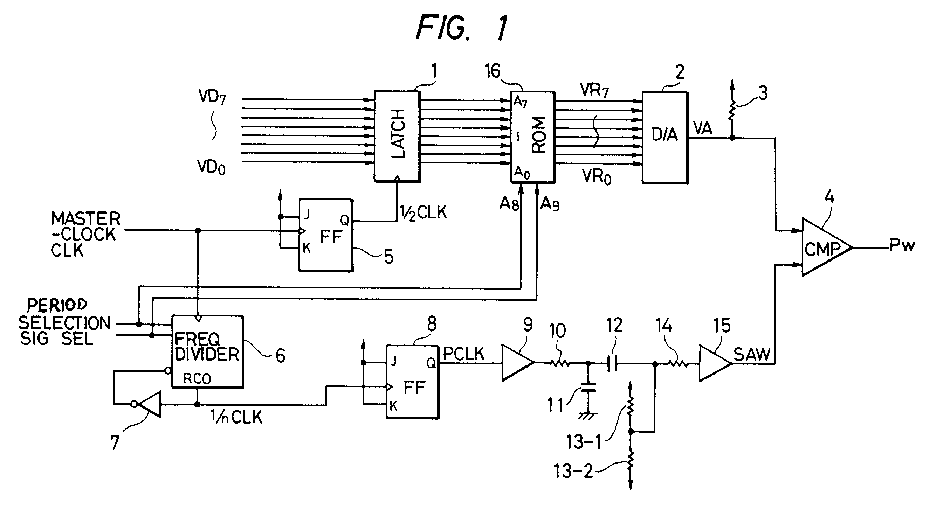

Figs. 1 to 3B show a first embodiment of the present invention. Fig. 1 is a circuit diagram of an analog image processing apparatus. The same reference numerals as in Fig. 5 denote the same parts in Fig. 1, and a detailed description thereof will be omitted. Referring to Fig. 1, a period selection signal SEL from a processor (not shown) is connected to a frequency divider 6 and upper address bits A8 and A9 of a ROM 16. The processor generates the period selection signal SEL according to the type of input image data (the type represents the characteristics or nature of the image). If the period selection signal SEL represents n, a clock signal CLK/n is output from the frequency divider 6. This clock is supplied to a JK flip-flop 8 to produce a pattern clock signal PCLK having a duty ratio of 50%. The pattern clock signal PCLK is input to an integrator of a resistor 10 and a capacitor 11 through a buffer 9. The integrator has a predetermined time constant determined by the resistor 10 and the capacitor 11. The integrator generates a triangular (or saw-tooth) wave signal SAW having an amplitude varying according to a designated period. The DC component of the triangular wave signal SAW is eliminated by the capacitor 12. The bias component of the triangular wave signal SAW is determined by a voltage divider consisting of resistors 13-1 and 13-2. The resultant triangular wave signal SAW is input to one input terminal of a comparator (CMP) 4.

A 1-kbyte ROM 16 is used to convert a gain of the input image signal (including the gain of the bias component in this embodiment). Eight bits VD0 to VD7 of the digital video signal are respectively input to lower eight bits A0 to A7 of the address terminal, and data is read out as gain conversion data bits VR0 to VR7 from the ROM 16. The gain conversion data is then converted into an analog image signal VA by the D/A converter 2. Since the ROM 16 has a capacity of 1 kbyte, the number of gain conversion tables is equal to that of patterns. The gain conversion tables are operated in synchronism with the frequency divider 6 in response to the period selection signal SEL and are selectively switched in response to upper address bits A8 and A9. Switching by the upper address bits A8 and A9 is performed by switching the gain and the bias level of the analog image signal VA when the period of the triangular wave signal SAW which satisfies the conditions given in Fig. 6 is switched.

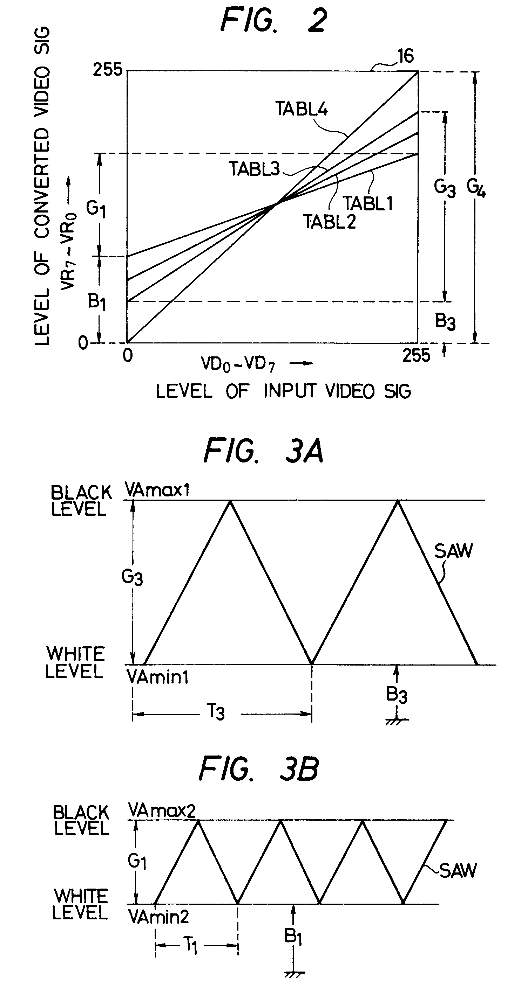

Fig. 2 is a chart showing conversion tables of the ROM 16. In the case of generating the triangular wave signal SAW by integrating the clock signal PCLK having a duty ratio of 50% at a predetermined time constant, as described above, the amplitude of the triangular wave signal SAW is increased when the designated period is prolonged. If the designated period is the longest, a conversion table TABL4 among tables TABL1 to TABL4 is selected. If the period is the second longest, TABL3 is selected. If the period is the shortest, TABL1 is selected. In any case, selection is performed to satisfy the relationship in Fig. 6.

Figs. 3A and 3B show the relationships between the triangular wave signal SAW and the analog image signal levels VAmax and VAmin when the designated period varies. In any case, the conditions (Fig. 6) concerning the amplitude and the bias component of the triangular wave signal SAW are found to be satisfied.

As described above, in character image reproduction, the frequency division ratio is given as substantially 1, and a one-pixel input digital video signal is PWM-modulated by one triangular wave signal SAW, thereby properly reproducing a change from the white pixel to the black pixel and vice versa. In photographic image reproduction, the frequency division ratio is set to be n larger than 1, and an n-pixel input digital video signal is PWM-modulated by one triangular wave signal SAW. In this manner, smooth halftone image reproduction is requested. In order to satisfy different requirements, i.e., character and photographic image reproduction modes, the image processing apparatus is operated as follows. In character image reproduction, since the designated period is short, a gain G1 is small and the tonality or gradation (i.e., a density resolution) is degraded accordingly. However, since the black or white pixel is required to be reproduced, no problem is posed. In this case, since the designated period is short, changes from the white to black pixels and vice versa can be quickly traced, thus reproducing a clear character image. In photographic image reproduction, since the designated period is long, a gain G4 is large and, the tonality (i.e., the density resolution) is effective in full scale.

With the arrangement of Fig. 1 as described above, when the Period selection signal SEL is designated as n, the frequency divider 6 generates the clock signal $\overline{\text{CLK}}$/n which is then converted by the JX flip-flop 8 into the pattern clock signal PCLK having a duty ratio of 50%. The pattern clock signal PCLK is converted into the triangular wave signal SAW through an integrator consisting the resistor 10 and the capacitor 11. The DC component of the triangular wave signal SAW is eliminated by the capacitor 12, and the bias component of the signal SAW is determined by the voltage divider consisting of the resistors 13-1 and 13-2. The resultant signal is input to one input terminal of the comparator 4. The triangular wave signal SAW is a cyclic pattern signal having the designated period, and its amplitude and bias components are changed according to the designated period. The lower address bits A0 to A7 of the ROM 16 are addressed by the data bits VD0 to VD7 of the digital image signal input thereto, and the upper address bits A8 and A9 are addressed by the period selection signal SEL. The ROM 16 stores the image data conversion tables TABL1 to TABL4 defining the four gains G and the four bias components B shown in Fig. 2. One of the image data conversion tables TABL1 to TABL4 is selected in response to the period selection signal SEL. This selection operation is synchronized with the operation of the frequency divider 6. The gain of the input image signal is switched according to selection of the period (amplitude) of the cyclic pattern signal. Therefore, the peak and bottom values of the triangular wave signal SAW coincide with the maximum and minimum values VAmax and VAmin of the image signal VA after gain conversion. In other words, as shown in Figs. 3A and 3B, if the designated period T1 is short, the gain G1 is small but the bias component B1 is large; however, if the designated period T3 is long, the gain G3 is large, but the bias component B3 is small.

Second Embodiment

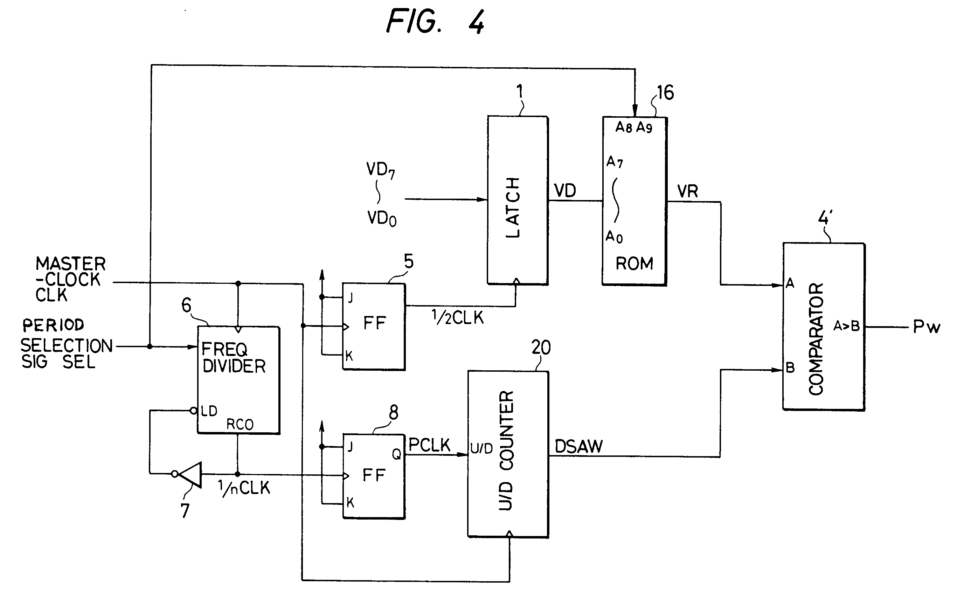

Fig. 4 is a block diagram of an image processing apparatus according to a second embodiment wherein the functions in Fig. 1 are achieved by digital elements. The same reference numerals as in Fig. 1 denote the same parts in Fig. 2, and a detailed description thereof will be omitted. Referring to Fig. 4, an up/down counter 20 is incremented at the first half of the pattern clock signal PCLK having a duty ratio of 50% but is decremented at the second half thereof. A count clock from the up/down counter 20 is set such that the count value is multiplied with n if the period selection signal SEL represents $\bar{n}$ since the master clock signal CLK has a predetermined pulse width. A digital comparator 4' has input terminals A and B. Eight-bit digital video data which is density-converted by the conversion tables (ROM 16) in Fig. 2 is input to the input terminal A, and a triangular wave count DSAW as an output from the up/down counter 20 is input to the input terminal B. The digital comparator 4' compares the input at the terminal A with the input at the terminal B. If A > B, the comparator 4' outputs a PWM image signal PW of high level. In this manner, the arrangement of Fig. 1 is substituted by the digital elements in Fig. 4, thereby satisfying the relationships given in Figs. 3A and 3B.

## Third Embodiment

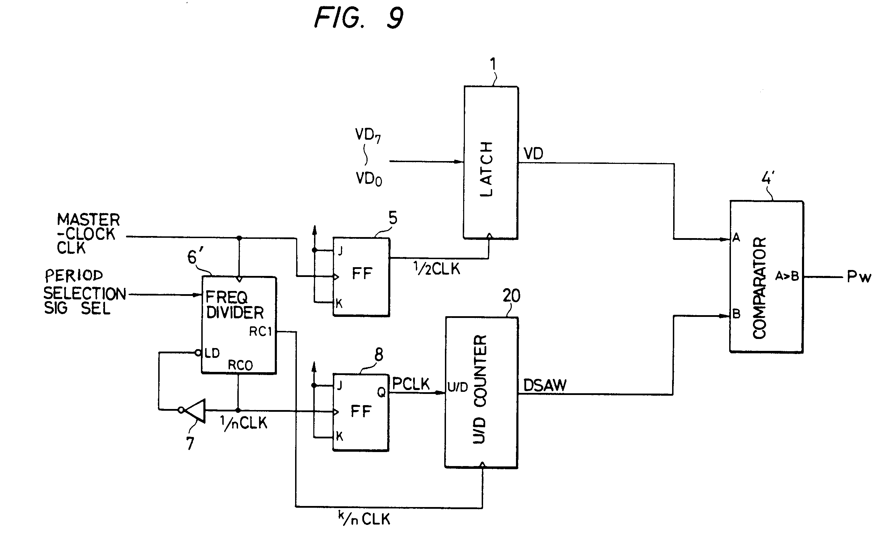

A third embodiment of the present invention will be described with reference to Figs. 7 and 8.

Fig. 7 is a circuit diagram of an analog image processing apparatus. The same reference numerals as in Fig. 5 denote the same parts in Fig. 7, and a detailed description thereof will be omitted. Referring to Fig. 7, analog switches 16 and 17 include a plurality of electronic switches each. One of the electronic switches is turned on according to a given state of select terminals S1 and S2. In this embodiment, the period selection signal SEL is connected from a processor (not shown) to a frequency divider 6 and analog switches 16 and 17. The processor generates the period selection signal SEL according to the type of input image data (the type represents the characteristics or nature of the image). If the period selection signal SEL represents $\bar{n}$, the frequency divider 6 generates a clock signal CLK/n, and then the JK flip-flop 8 generates a pattern clock signal PCLK having a duty ratio of 50%. The pattern clock signal PCLK is simultaneously supplied to resistors 10-1 to 10-4 through a buffer 9. When one of the resistors 10-1 to 10-4 is connected to the capacitor 11, the capacitor 11 and the resistor connected thereto constitute an integrator having a predetermined time constant determined thereby. The resistances of the resistors 10-1 to 10-4 are determined to satisfy the amplitude conditions of Fig. 6 according to the corresponding designated periods. Therefore, the analog switch 16 is synchronized with the frequency divider 6 to connect the capacitor 11 to a proper resistor having a resistance corresponding to the desired designated period, thereby satisfying the corresponding amplitude condition in Fig. 6. The DC component of an integral signal from the integrator is eliminated by a capacitor 12, and the bias component of the integral signal is determined by the following voltage divider. The analog switch 17 is synchronously connected to one of the contacts of the voltage divider constituted by resistors 13-1 to 13-5. Similarly, the analog switch 17 is interlocked with the frequency divider 6 and the analog switch 16. The analog switch 17 is connected to one of the contacts of the resistors 13-1 to 13-5 to satisfy the bias condition in Fig. 6 even if any desired period is designated. In this manner, the bias conditions as well as the amplitude conditions are satisfied.

Figs. 8A and 8B are charts showing the relationships between the triangular wave signal SAW and the analog image signal levels VAmax and VAmin when the designated period varies. In either case, the amplitude and bias conditions of the triangular wave signal SAW in Fig. 6 are satisfied.

## Fourth Embodiment

Fig. 9 is a block diagram of an image processing apparatus according to a fourth embodiment wherein the functions of Fig. 7 are achieved by digital elements. The same reference numerals as in Fig. 7 denote the same parts in Fig. 9, and a detailed description thereof will be omitted. Referring to Fig. 9, a frequency divider 6' outputs two types frequency-divided signals CLK/n and kCLK/n. The clock signal kCLK/n always has a frequency $\bar{k}$ times that of the clock signal CLK/n. An up/down counter 20 is incremented at the first half of the pattern clock signal PCLK having a duty ratio of 50% and is decremented at the second half thereof. A count clock from the up/down counter 20 is the clock signal kCLK/n having a frequency $\bar{k}$ times that of the clock signal CLK/n. The up/down counter 20 always counts up k pulses at the first half of the pattern clock signal PCLK and always counts down k pulses at the second half thereof regardless of the period represented by the signal SEL. A digital comparator 4' compares 8-bit digital video data VD received at an input terminal A thereof and an up/down counter output DSAW received at an input terminal B thereof. If A > B, the comparator 4' outputs a PWM image signal PW. The arrangement of Fig. 7 is thus substituted by the digital elements in Fig. 9, and the amplitude and bias conditions in Fig. 6 are satisfied.

## Fifth Embodiment

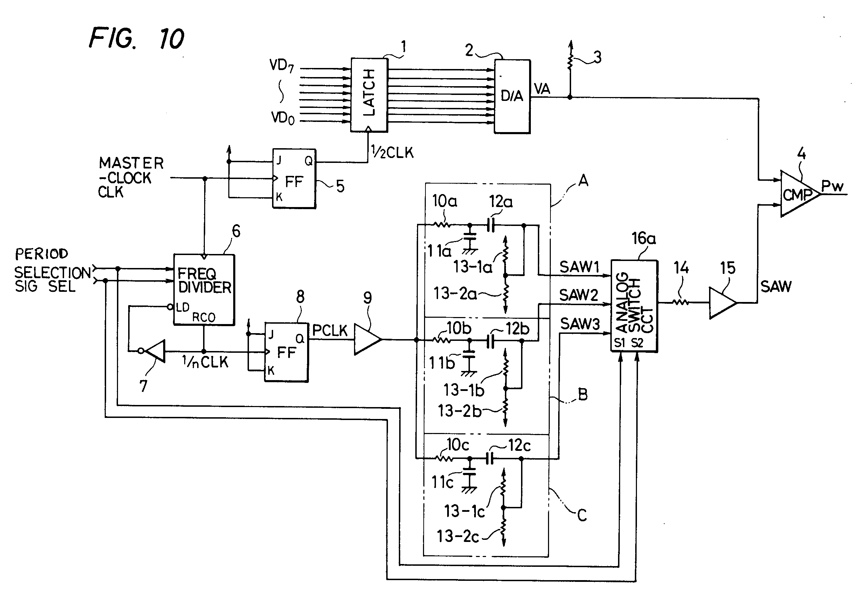

A fifth embodiment of the present invention will be described with reference to Figs. 10 to 11B.

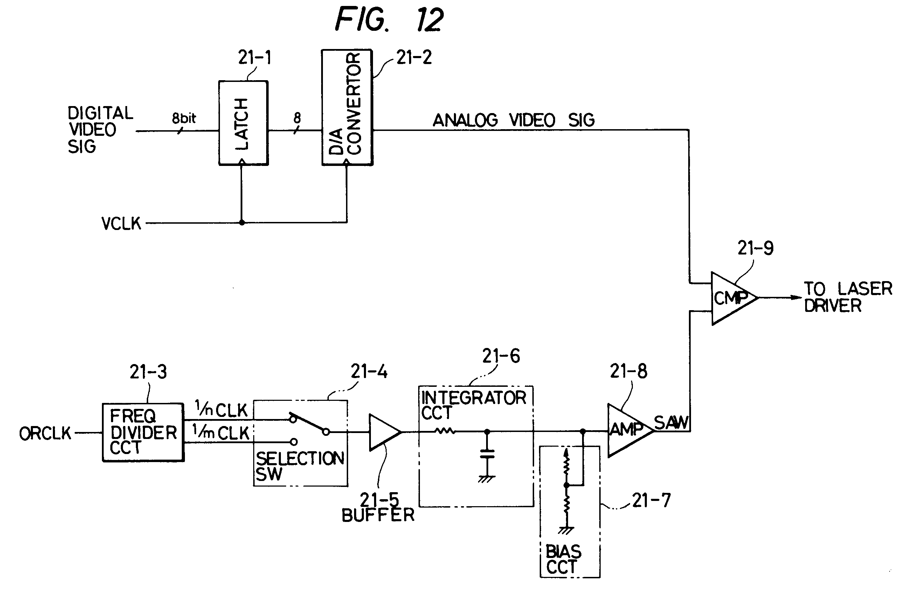

Fig. 10 is a circuit diagram of an image processing apparatus of this embodiment, and Figs. 11A and 11B are charts showing the relationships between the triangular wave signal SAW and the level of the analog image signal VA in the apparatus of Fig. 10. The same reference numerals as in Fig. 5 denote the same parts in Fig. 10, and a detailed description thereof will be omitted. Referring to Fig. 10, an analog switch 16a includes internal electronic switches. One of the electronic switches is turned on according to a given state of select terminals S1 and S2. In this embodiment, a period selection signal SEL is connected from a processor (not shown) to a frequency divider 6 and the analog switch 16a so that the frequency divider 6 can be synchronized with the analog switch 16a. The processor generates the period selection signal SEL according to the type of input image data (the type represents the characteristics or nature of the image). If the period selection signal SEL represents n, the frequency divider 6 generates the clock signal CLK/n, and a JK flip-flop 8 then generates the pattern clock signal PCLK having a duty ratio of 50%. The pattern clock signal PCLK is simultaneously supplied to resistors 10a to 10c and is integrated by integrators having capacitors 11a to 11c and the corresponding resistors 10a to 10c. The time constants of these integrators or triangular wave generating means are determined by the corresponding pairs of resistor and capacitor. The time constant of a triangular wave generating means A is determined by the resistor 10a and the capacitor 11a so as to correspond to the designated period n = 1. If the pattern clock signal PCLK corresponds to the designated period n = 1, its integrated wave is determined to satisfy the period n = 1 and the conditions of the amplitude range of VAmin to VAmax in Fig. 11A. The time constant of a triangular wave signal generating means B is determined by the resistor 10b and the capacitor 11b so as to correspond to the designated period n = 2. Similarly, if the pattern clock signal PCLK corresponds the designated period n = 2, the integrated waveform is determined to satisfy the period n = 2 and the conditions for the amplitude range of VAmin to VAmax. The time constant of a triangular wave signal generating means C is determined by the resistor 10c and the capacitor 11c so as to correspond to the predetermined period n = 3. If the pattern clock signal PCLK corresponds to the designated period n = 3, its integrated waveform is determined to satisfy the period n = 3 and the conditions for the amplitude range of VAmin to VAmax in Fig. 11B. The DC components of these integral signals are eliminated by capacitors 12a to 12c, and their bias components are determined by the following voltage dividers 13-1a and 13-2a to 13-1c and 13-2c, respectively. Therefore, the analog switch 16a is synchronized with the frequency divider 6 to select an optimal one of triangular wave signals SAW1 to SAW3 regardless of the designated periods. Therefore, the period and amplitude conditions described with reference to Fig. 6 are always satisfied.

Figs. 11A and 11B show the relationships between the triangular wave signal SAW and the analog image signal levels VAmax and VAmin when the designated period varies. In any case, the amplitude and bias conditions of the triangular wave signal SAW in Fig. 6 are satisfied.

Sixth Embodiment

A sixth embodiment of the present invention will be described below.

Before describing the sixth embodiment, an arrangement of a pulse width modulator will be described with reference to Fig. 12.

Fig. 12 shows an arrangement for forming a halftone image at a laser beam printer or the like. An input digital image signal is converted into an analog image signal. The analog image signal is compared with a cyclic analog pattern signal such as a triangular wave signal, thereby generating a PWM binary image signal.

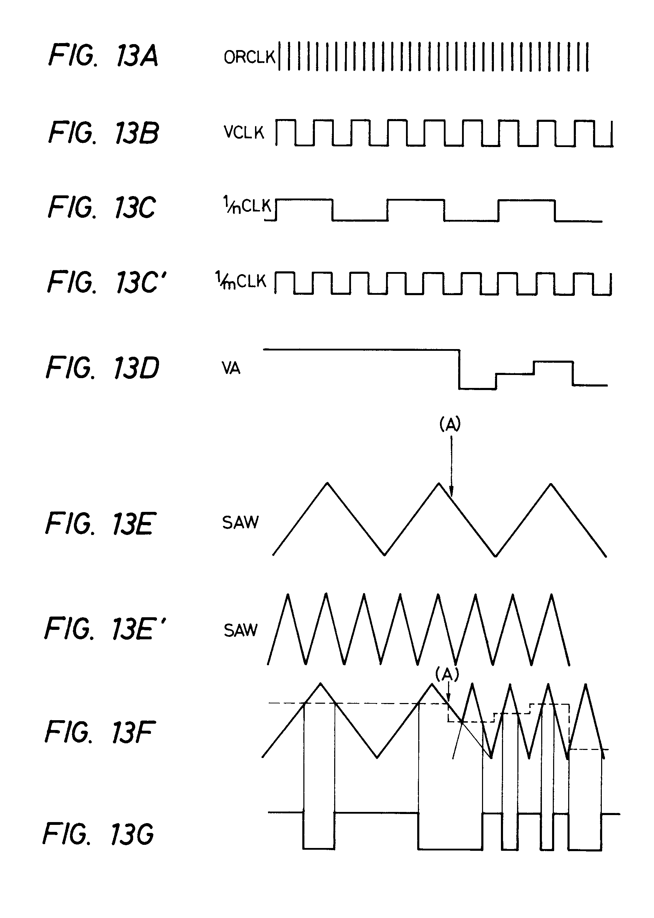

Figs. 13A to 13G are timing charts of the signals generated in the pulse width modulator in Fig. 12. Referring to Fig. 12, an 8-bit input digital video signal VD is latched and timed by a latch 21-1 in response to a video clock signal VCLK (Fig. 13B). The video clock signal VCLK is a clock signal obtained by dividing a master clock signal ORCLK (Fig. 13A) by a JK flip-flop or the like (not shown) into halves. The latched video signal is converted into an analog video signal VA (Fig. 13D) by a D/A converter 21-2 in response to the video clock signal VCLK. The analog video signal VA is input to one input terminal of a comparator (CMP) 21-9. The master clock signal ORCLK is divided by a frequency divider 21-3 at frequency division ratios of 1/n and 1/m to obtain clock signals CLK/n and CLK/m (Figs. 13C and 13C') each having a duty ratio of 50%. One of these pattern clock signals CLK/n and CLK/m is selected by a selection switch 21-4. The selected pattern clock signal is input to an integrator 21-6 of a resistor and a capacitor through a buffer 21-5. The integrator 21-6 generates a triangular wave signal (i.e., an analog signal) having the same period as that of the input pattern clock signal. The bias component of the triangular wave signal SAW is adjusted by a bias circuit 21-7. The resultant triangular wave signal SAW is then input to the other input terminal of the comparator 21-9 through a buffer amplifier 21-9 (Figs. 13E and 13E'). The comparator 21-9 compares the analog video signal VA with the triangular wave signal SAW (Fig. 13F in which the dotted line represents the analog video signal VA). The analog video signal VA is converted into a PWM binary signal (Fig. 13G) according to the density represented the signal VA.

The binary signal is input to a laser driver (not shown) to turn on/off laser beams.

If the image area represented by an input image signal is changed from a region (image area) whose primary importance is the tonality to a region whose primary importance is the resolution, the selection switch 21-4 is switched to use the signal CLK/m (Fig. 13C'). Therefore, an output from the buffer amplifier 21-8 is a composite triangular wave signal having different periods, as shown in Fig. 13F.

In this case, when the pattern clock is switched, the pattern clock signal has processed by the integrator 21-6 so that the waveform is not so steep and a waveform portion represented by point A in Fig. 13F results in.

As shown in Fig. 13F, if switching of the triangular wave signal is not properly performed in correspondence with the image area, the predetermined binary output cannot be obtained. In an area requiring a high resolution, the edge becomes undesirably moderate. In a area requiring an accurate gray scale level, the edge is undesirably emphasized. In this manner, proper image outputs corresponding to the types of image areas cannot be undesirably obtained.

If the period of the pattern clock signal is simply changed, the amplitude and bias components of the triangular wave SAW are changed, and sufficient pulse width modulation cannot be performed.

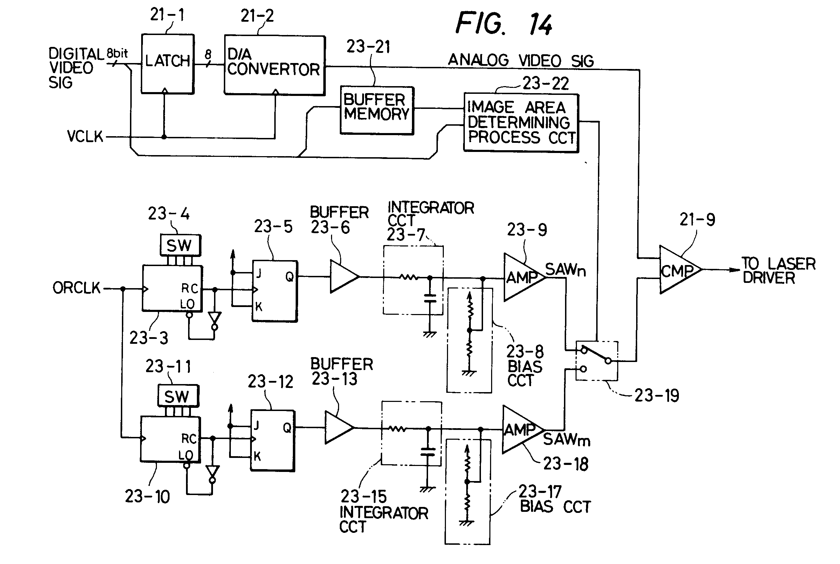

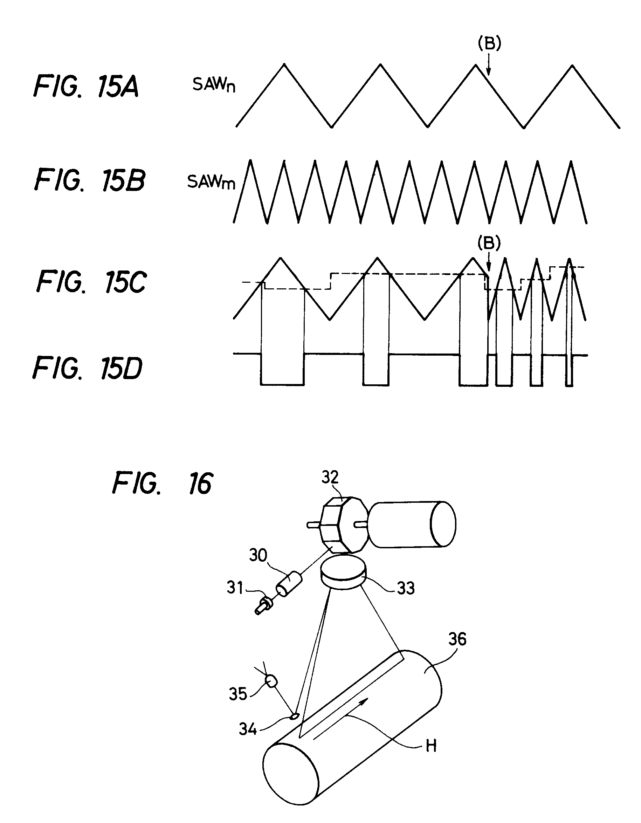

Fig. 14 is a circuit diagram of an image processing apparatus according to a sixth embodiment of the present invention. The same reference numerals as in Fig. 12 denote the same functions in Fig. 14, and a detailed description thereof will be omitted. Figs. 15A to 15D are timing charts of signals in the circuit of Fig. 14.

Referring to Fig. 14, counters 23-3 and 23-10 frequency-divide a master clock signal ORCLK according to values determined by switches 23-4 and 23-11. The frequency-divided master clock signals are then further divided into halves by JK flip-flops 23-5 and 23-12, respectively. Therefore, the JK flip-flops 23-5 and 23-12 generate pattern clock signals CLK/n and CLK/m each having a duty ratio of 50%, as shown in Figs. 13C and 13C'.

The pattern clock signals CLK/n and CLK/m are respectively input to integrators 23-7 and 23-15 each constituting of a resistor and a capacitor through buffers 23-6 and 23-13. The integrators 23-7 and 23-15 generate triangular wave signals (the pattern signal) SAWn (Fig. 15A) and SAWm (Fig. 15B). The bias components of the triangular wave signals SAWn and SAWm are adjusted by bias circuits 23-8 and 23-17, respectively. The resultant signals are input to a switch 23-19 through buffer amplifiers 23-9 and 23-18.

One of the triangular wave signals SAWn and SAWm is selected by the switch 23-19. The selected signal is input to the other input terminal of the comparator 21-9. The comparator 21-9 compares the analog video signal and the selected triangular wave signal (Fig. 15C in which the dotted line represents the analog video signal VA). The analog video signal VA is thus converted into a PWM binary signal (Fig. 15D) according to the density.

The 8-bit input digital video signal VD is input to the latch 21-1, a buffer memory 23-21, and an image area determining process circuit 23-22.

The image area determining process circuit 23-22 determines the type of image (i.e., the type represents the characteristics or nature of the image) by utilizing an output from the buffer memory 23-21. The switch 23-19 is changed over according to the determination result. In this embodiment, the image area determining process circuit 23-22 determined whether each pixel is located in the area (i.e., an area of a halftone image such as a photograph) whose primary importance is the gradation or the area (i.e., an area of a line image such as a character). If the process circuit 23-22 determines that the pixel is located in the halftone area, it selects the triangular wave signal (Fig. 15A) having a long period. Otherwise, the process circuit 23-22 selects the triangular wave signal (Fig. 15B) having a short period.

The operation of the above apparatus will be described in more detail with reference to the waveforms of Figs. 15A to 15D. If the image area is changed from the halftone area to the line image area at point B, the waveform of the triangular wave signal is changed such that each vertex of the wave is more acute.

The triangular wave can be immediately changed upon changing of the image area from the halftone image to the line image area. Therefore, a reproduced output (i.e., the PCM binary signal) of high quality can be obtained. The amplitudes and the bias components of the triangular waves SAWn and SAWm output from the buffer amplifiers 23-9 and 23-18 are preferably kept unchanged. The relationship between the amplitude of the input image signal and the amplitude of the triangular wave signal is predetermined regardless of any selection of the triangular wave signal. Therefore, a reproduced image of high quality can be obtained.

If the circuit in Fig. 14 is applied to a laser printer or the like, the input image signal and the triangular wave may be generated in response to a known BD (Beam Detection) signal (i.e., a signal representing the horizontal scanning position of the laser beam). As a result, the triangular waves can be generated at accurate timings in units of main scanning lines. A desired screen in the reproduced image can be formed, thus obtaining a reproduced image of high quality.

In the above embodiment, two types of triangular waves are prepared and selectively used. However, the number of triangular waves may be three or more. These triangular waves may be selectively used according to the types of images. In this embodiment, the triangular waves in Figs. 15A and 15B are used as the pattern signals. However, the pattern signal may be of any shape.

Fig. 16 is a schematic perspective view of a laser beam printer (a raster scanning printer) scanning optical system to which the present invention is applied. The scanning system in Fig. 16 has a semiconductor laser for emitting a laser beam modulated in response to the PWM signal described above. A laser beam modulated by a semiconductor laser 31 is collimated by a collimator lens 30. The collimated beam is deflected by a polygonal rotary mirror (applying means) 32 having a plurality of reflecting surfaces. The deflected beam is focused on a photosensitive drum 36 by a focusing lens 33 called an f-θ lens. During beam scanning, the leading end of the optical beam of one-line scanning is reflected by a mirror 34 to guide it to a beam detector (sensor) 35. A beam detection (BD) signal from the beam detector 35 is used as a horizontal sync signal along a scanning direction H (horizontal direction).

## Claims

1. An image processing apparatus, comprising:
   converting means (16,2) for converting an input image signal, and
   generating means (4, 6 - 15) for generating a pulsed signal and modulating the pulse width of said pulsed signal in response to the converted input signal, characterised by
   said generating means including means for generating a first pulse signal with a first period and for generating a second pulse signal with a second period;
   said converting means (16) having a first mode of conversion and a second mode of conversion; and
   selecting means (SEL,6) for selecting the first pulsed signal or the second pulsed signal wherein, on selecting the first pulsed signal, said first mode of conversion is selected in synchronism and, on selecting the second pulsed signal, said second mode of conversion is selected in synchronism.

2. Apparatus according to claim 1, wherein said generating means comprises first and second pattern signal generating means (23-2 - 23-9; 23-10 - 23-18) for generating pattern signals having respective different periods.

3. Apparatus according to claim 1 or claim 2, wherein said converting means (16) comprises a plurality of tables (TABL1 - TABL4) for receiving the image signal as an address signal and outputting a digital image signal, one of said plurality of tables being selected in synchronism with the selection of a pulsed signal.

4. Apparatus according to claim 2 or claim 3, wherein said converting means comprises a digital to analogue converter (2) for converting a digital image signal into an analogue image signal, and said generating means comprises comparing means (4) for comparing the analogue image signal with the pattern signal selected by said selecting means, to form the pulse width modulated signal.

5. Apparatus according to claim 2, claim 3 or claim 4, wherein said pattern signal generating means (23) includes clock signal generating means (6, 8) for generating first clock signals and second clock signals having mutually different periods, so as to form first pattern signals and second pattern signals respectively, wherein said selecting means selects one of the first or second clock signals.

6. Apparatus according to any of claims 2 to 5, wherein the first and second pattern signals are triangular wave signals.

7. Apparatus according to any preceding claim, wherein said conversion is selected so as to maintain the grey scale representation of the pulse width modulated output signal substantially correct for image signals having different resolutions.

8. Image reproduction apparatus comprising apparatus according to any preceding claim, including means (30, 35) for directing said modulated pulse output to an image reproducing surface (36).

9. A laser printer comprising image reproduction apparatus according to claim 8, wherein said directing means is a laser beam (31) and an optical deflection system (30, 32, 33) arranged to direct said beam towards means (36) for carrying a reproducing surface.

10. A method of processing image data, comprising the steps of converting an input image signal and modulating the pulse widths of a pulse signal in response to said input signal, characterised by selecting a pulse signal with a first period or a pulse signal with a second period and, in synchronism with said selection of a pulse signal, selecting a respective conversion mode for said converting means.

11. A method according to claim 10, wherein a pattern signal at a desired repitition frequency is generated, and said converted signal is compared with said pattern signal, wherein an output is generated when one of said signals is greater than the other.

12. A method according to claim 10 or claim 11, wherein said converting step comprises looking up an output value in a table addressed by an input value.

13. A method according to claim 11 or claim 12, wherein said converting step comprises converting a digital image signal into a corresponding analogue signal for comparison with the pattern signal.

14. A method according to claim 11, wherein the pattern signals are triangular wave signals.

15. A method according to any one of claims 10 to 14, wherein the selection is arranged so as to maintain the grey scale representation of the pulse width modulated output substantially correct for different resolution image signals.

## Patentansprüche

1. Bildbearbeitungseinrichtung, die

eine Bearbeitungseinrichtung (16,2) zum Umformen eines eingegebenen Bildsignals und

eine Generatoreinrichtung (4,6-15) zum Erzeugen eines Impulssignals und zum Modulieren der Impulsbreite des Impulssignals gemäß dem umgeformten Eingangssignal aufweist, dadurch gekennzeichnet, daß

die Generatoreinrichtung eine Einrichtung zum Erzeugen eines ersten Impulssignals mit einer ersten Periode und zum Erzeugen eines zweiten Impulssignals mit einer zweiten Periode enthält,

die Bearbeitungseinrichtung (16) eine erste Umformungsart und eine zweite Umformungsart aufweist und

eine Wähleinrichtung (SEL,6) das erste Impulssignal oder das zweite Impulssignal wählt, wobei bei der Wahl des ersten Impulssignals gleichzeitig die erste Umformungsart gewählt wird und bei der Wahl des zweiten Impulssignals gleichzeitig die zweite Umformungsart gewählt wird.

2. Einrichtung nach Anspruch 1, in der die Generatoreinrichtung eine erste und eine zweite Mustersignal- Generatoreinrichtung (23-2 - 23-9; 23-10 - 23-18) zum Erzeugen von Mustersignalen mit jeweils voneinander verschiedenen Perioden aufweist.

3. Einrichtung nach Anspruch 1 oder 2, in der die Bearbeitungseinrichtung (16) eine Vielzahl von Tabellen (TABL1 - TABL4) zum Aufnehmen des Bildsignals als Adressensignal und zum Abgeben eines digitalen Bildsignals aufweist, wobei gleichzeitig mit der Wahl eines Impulssignals eine der Vielzahl von Tabellen gewählt wird.

4. Einrichtung nach Anspruch 2 oder 3, in der die Bearbeitungseinrichtung einen Digital/Analog-Wandler (2) zum Umsetzen eines digitalen Bildsignals in ein analoges Bildsignal aufweist und die Generatoreinrichtung eine Vergleichseinrichtung (4) zum Vergleichen des analogen Bildsignals mit dem mittels der Wähleinrichtung gewählten Mustersignal für das Formen des impulsbreitenmodulierten Signals aufweist.

5. Einrichtung nach Anspruch 2, 3 oder 4, in der die Mustersignal- Generatoreinrichtung (23) eine Taktsignal- Generatoreinrichtung (6,8) zum Erzeugen erster Taktsignale und Zweiter Taktsignale, die voneinander verschiedene Perioden haben, für das jeweilige Formen erster Mustersignale bzw. zweiter Mustersignale enthält, wobei die Wähleinrichtung die ersten oder die zweiten Taktsignale wählt.

6. Einrichtung nach einem der Ansprüche 2 bis 5, in der die ersten und zweiten Mustersignale Dreieckwellensignale sind.

7. Einrichtung nach einem der vorangehenden Ansprüche, in der die Umformung derart gewählt wird, daß die Grauskaladarstellung des impulsbreitenmodulierten Ausgangssignals im wesentlichen für Bildsignale mit unterschiedlichen Auflösungen angepaßt gehalten ist.

8. Bildreproduktionsvorrichtung mit einer Einrichtung gemäß einem der vorangehenden Ansprüche, mit einem Mittel (30, 35) zum Übertragen des modulierten Impulsausgangssignals auf eine Bildreproduktionsfläche (36).

9. Laserstrahldrucker mit der Bildreproduktionsvorrichtung nach Anspruch 8, in dem das Übertragungsmittel ein Laserstrahl (31) ist und ein optisches Ablenksystem (30, 32, 33) zum Hinführen des Strahls zu einer Vorrichtung (36) für das Transportieren einer Reproduktionsfläche gestaltet ist.

10. Verfahren zur Bilddatenverarbeitung, bei dem ein eingegebenes Bildsignal umgeformt wird und die Impulsbreite eines Bildsignals entsprechend dem Eingangssignal moduliert wird, dadurch gekennzeichnet, daß

ein Impulssignal mit einer ersten Periode oder ein Impulssignal mit einer zweiten Periode gewählt wird und gleichzeitig mit der Wahl des Impulssignals eine entsprechende Umformungsart für die Umformung gewählt wird.

11. Verfahren nach Anspruch 10, bei dem ein Mustersignal mit einer gewünschten Wiederkehrfrequenz erzeugt wird und das umgeformte Signal mit dem Mustersignal verglichen wird, wobei ein Ausgangssignal erzeugt wird, wenn eines der Signale größer als das andere ist.

12. Verfahren nach Anspruch 10 oder 11, bei dem das Umformen ein Herausgreifen eines Ausgangswerts in einer durch einen Eingangswert adressierten Tabelle umfaßt.

13. Verfahren nach Anspruch 11 oder 12, bei dem das Umformen ein Umsetzen eines digitalen Bildsignals in ein entsprechendes analoges Signal für den Vergleich mit dem Mustersignal umfaßt.

14. Verfahren nach Anspruch 11, bei dem die Mustersignale Dreieckwellensignale sind.

15. Verfahren nach einem der Ansprüche 10 bis 14, bei dem das Wählen derart erfolgt, daß die Grauskaladarstellung des impulsbreitenmodulierten Ausgangssignals im wesentlichen für Bildsignale unterschiedlicher Auflösung angepaßt gehalten wird.

**Revendications**

1. Un appareil de traitement d'image, comprenant:

des moyens de conversion (16, 2) destinés à convertir un signal d'image d'entrée, et

des moyens de génération (4, 6 - 15) destinés à générer un signal impulsionnel et à moduler la largeur d'impulsion de ce signal impulsionnel sous la dépendance du signal d'entrée converti, caractérisé en ce que

les moyens de génération comprennent des moyens destinés à générer un premier signal impulsionnel ayant une première période, et à générer un second signal impulsionnel ayant une seconde période ;

les moyens de conversion (16) ont un premier mode de conversion et un second mode de conversion; et

des moyens de sélection (SEL, 6) sont incorpores dans le but de sélectionner le premier signal impulsionnel ou le second signal impulsionnel et dans le cas de la sélection du premier signal impulsionnel, le premier mode de conversion est sélectionné en synchronisme, tandis que dans le cas de la sélection du second signal impulsionnel, le second mode de conversion est sélectionné en synchronisme.

2. Appareil selon la revendication 1, dans lequel les moyens de génération comprennent des premiers et seconds moyens de génération de signal de configuration (23-2 - 23-9; 23-10 - 23-18) qui sont destinés à générer des signaux de configuration ayant des périodes différentes respectives.

3. Appareil selon la revendication 1 ou la revendication 2, dans lequel les moyens de conversion (16) comprennent un ensemble de tables (TABL1-TABL4) qui sont destinées à recevoir le signal d'image à titre de signal d'adresse, et à présenter en sortie un signal d'image numérique, l'une des tables de cet ensemble de tables étant sélectionnée en synchronisme avec la sélection d'un signal impulsionnel.

4. Appareil selon la revendication 2 ou la revendication 3, dans lequel les moyens de conversion comprennent un convertisseur numérique-analogique (2) qui est destiné à convertir un signal d'image numérique en un signal d'image analogique, et les moyens de génération comprennent des moyens de comparaison (4) qui sont destinés à comparer le signal d'image analogique avec le signal de configuration qui est sélectionné par les moyens de sélection, pour former le signal à largeur d'impulsion modulée.

5. Appareil selon la revendication 2, la revendication 3 ou la revendication 4, dans lequel les moyens de génération de signal de configuration (23) comprennent des moyens de génération de signaux d'horloge (6, 8) qui sont destinés à générer des premiers signaux d'horloge et des seconds signaux d'horloge ayant des périodes mutuellement différentes, de façon à former respectivement des premiers signaux de configuration et des seconds signaux de configuration, les moyens de sélection sélectionnant les premiers ou les seconds signaux d'horloge.

6. Appareil selon l'une quelconque des revendications 2 à 5, dans lequel les premiers et seconds signaux de configuration sont des signaux de forme triangulaire.

7. Appareil selon l'une quelconque des revendications précédentes, dans lequel la conversion est sélectionnée de façon à maintenir une représentation d'échelle de gris pratiquement correcte pour le signal de sortie à largeur d'impulsion modulée, pour des signaux d'image ayant différentes résolutions.

8. Appareil de reproduction d'image comprenant un appareil conforme à l'une quelconque des revendications précédentes, comportant des moyens (30, 35) qui sont destinés à diriger le signal de sortie impulsionnel modulé vers une surface de reproduction d'image (36).

9. Une imprimante laser comprenant un appareil de reproduction d'image selon la revendication 8, dans lequel les moyens qui dirigent le signal de sortie consistent en un faisceau laser (31) et en un système de déflexion optique (30, 32, 33) qui est conçu pour diriger le faisceau vers des moyens (36) qui supportent une surface de reproduction.

10. Un procédé de traitement de données d'image comprenant les étapes suivantes :
    on convertit un signal d'image d'entrée et on module les largeurs d'impulsion d'un signal impulsionnel sous la dépendance du signal d'entrée, caractérisé en ce que
    on sélectionne un signal impulsionnel ayant une première période ou un signal impulsionnel ayant une seconde période et, en synchronisme avec la sélection d'un signal impulsionnel, on sélectionne un mode de conversion respectif pour les moyens de conversion.

11. Un procédé selon la revendication 10, dans lequel on génère un signal de configuration ayant une fréquence de répétition désirée, et on compare le signal converti avec le signal de configuration, et dans lequel on génère un signal de sortie lorsque l'un des signaux précités est plus grand que l'autre.

12. Un procédé selon la revendication 10 ou la revendication 11, dans lequel l'étape de conversion comprend la lecture d'une valeur de sortie dans une table qui est adressée par une valeur d'entrée.

13. Un procédé selon la revendication 11 ou la revendication 12, dans lequel l'étape de conversion comprend la conversion d'un signal d'image numérique en un signal analogique correspondant, pour la comparaison avec le signal de configuration.

14. Un procédé selon la revendication 11, dans lequel les signaux de configuration sont des signaux de forme triangulaire.

15. Un procédé selon l'une quelconque des revendications 10 à 14, dans lequel la sélection est conçue de façon à maintenir une représentation d'échelle de gris pratiquement correcte du signal de sortie à largeur d'impulsion modulée, pour des signaux d'image ayant différentes résolutions.

## FIG. 1

## FIG. 2

## FIG. 3A

## FIG. 3B

FIG. 4

## FIG. 5

## FIG. 6

# FIG. 7

## FIG. 8A

BLACK LEVEL (FFH)

VAmax

SAW

WHITE LEVEL (OOH)

VAmin

## FIG. 8B

BLACK LEVEL (FFH)

VAmax

SAW

WHITE LEVEL (OOH)

VAmin

## FIG. 11A

BLACK LEVEL (FFH)

VAmax

SAW

WHITE LEVEL (OOH)

VAmin

$n=1$

## FIG. 11B

BLACK LEVEL (FFH)

VAmax

SAW

WHITE LEVEL (OOH)

VAmin

$n=3$

EP 0 212 990 B1

FIG. 9

FIG. 10

# FIG. 12

DIGITAL VIDEO SIG — 8bit — LATCH (21-1) — 8 — D/A CONVERTOR (21-2) — ANALOG VIDEO SIG

VCLK

CMP (21-9) — TO LASER DRIVER

ORCLK — FREQ DIVIDER CCT (21-3) — 1/n CLK / 1/m CLK — SELECTION SW (21-4) — BUFFER (21-5) — INTEGRATOR CCT (21-6) — AMP (21-8) SAW

BIAS CCT (21-7)

EP 0 212 990 B1

FIG. 13A    ORCLK

FIG. 13B    VCLK

FIG. 13C    1/nCLK

FIG. 13C'   1/nCLK

FIG. 13D    VA

(A)

FIG. 13E    SAW

FIG. 13E'   SAW

(A)

FIG. 13F

FIG. 13G

FIG. 14

DIGITAL 8bit VIDEO SIG

VCLK

21-1 LATCH

21-2 D/A CONVERTOR

23-21 BUFFER MEMORY

23-22 IMAGE AREA DETERMINING PROCESS CCT

ANALOG VIDEO SIG

21-9 CMP

TO LASER DRIVER

ORCLK

23-4 SW

23-3 RC LO

23-5 J Q K

23-6 BUFFER

23-7 INTEGRATOR CCT

23-8 BIAS CCT

23-9 AMP SAWn

23-11 SW

23-10 RC LO

23-12 J Q K

23-13 BUFFER

23-15 INTEGRATOR CCT

23-17 BIAS CCT

23-18 AMP SAWm

23-19

22

FIG. 15A

FIG. 15B

FIG. 15C

FIG. 15D

FIG. 16